# EUROPÄISCHE PATENTSCHRIFT

(11) **EP 4 165 979 B1**
(45) Veröffentlichungstag und Bekanntmachung des Hinweises auf die Patenterteilung: **07.01.2026**
(21) Anmeldenummer: 22201138.9
(22) Anmeldetag: 12.10.2022
(51) Int. Cl.: A01D 41/14, A01D 57/10, A01D 34/40

(54) **BANDSCHNEIDWERK MIT UMRÜSTUNGSSCHNITTSTELLE AUF EIN LUFTFÖRDERSYSTEM**
HEADER WITH BELT CONVEYOR HAVING CONVERSION INTERFACE TO AIR CONVEYOR SYSTEM
BARRE DE COUPE A BANDE AVEC INTERFACE DE CONVERSION SUR UN SYSTÈME DE TRANSPORT D'AIR

(30) Priorität: 14.10.2021 DE 102021126683
(43) Veröffentlichungstag der Anmeldung: 19.04.2023
(73) Patentinhaber: Carl Geringhoff GmbH & Co. Kommanditgesellschaft, 59227 Ahlen (DE)
(72) Erfinder: Sudhues, Steffen, 59227 Ahlen (DE); Hartmann, Christoph, 59320 Ennigerloh (DE); Pokriefke, Michael, 27798 Hude (DE)
(74) Vertreter: Weeg, Thomas

(56) Entgegenhaltungen:
- DE-A1- 102014 009 159
- DE-A1- 102015 110 746
- US-A1- 2009 199 529
- US-A1- 2017 295 722
- US-A1- 2021 204 479

## Beschreibung

Die vorliegende Erfindung bezieht sich auf ein Bandschneidwerk zum Anbau an eine Erntemaschine mit einem Rahmen, einem Messerbalken, einer Messerwinkelkonstruktion zur Halterung des Messerbalkens, Bandfördervorrichtungen zum Abfördern des geschnittenen Halmguts mit einer Abstützvorrichtung und Antriebsvorrichtungen zum Antrieb des Messerbalkens und der Bandfördervorrichtungen.

Ein gattungsgemäßes Bandschneidwerk ist aus der Schrift DE 10 2017 113 775 A1 bekannt. Das geschnittene Halmgut wird von der Haspel auf den endlos umlaufenden Förderbändern abgelegt. Diese tragen das geschnittene Erntegut mittig zusammen, von wo aus es mit dem Mittenband nach hinten in Richtung eines Schrägförderers eines Mähdreschers abgefördert und an diesen übergeben wird.

Aus der Schrift DE 10 2015 110 746 A1 ist ein Bandschneidwerk mit einem fest integrierten Luftfördersystem bekannt. Das dort offenbarte Bandschneidwerk verfügt über Luftaustrittsöffnungen, die im vorderen Bereich des Bandschneidwerks und hier insbesondere im Bereich der Stufe zwischen dem Messerbalken und der Oberseite der Bandfördervorrichtung angeordnet sind. Der Luftstrom wird von mehreren Gebläsen erzeugt, die auf der Rückseite des Bandschneidwerks angeordnet sind. Die Zuleitung des Luftstroms von einem Gebläse zu den diesem Gebläse zugeordneten Luftaustrittsöffnungen erfolgt über Zuführleitungen, die in einem Luftkanal münden, der sich quer über die Arbeitsbreite des Bandschneidwerks erstreckt und im vorderen Bereich des Bandschneidwerks angeordnet ist. Das Luftfördersystem mit dem aus den Luftaustrittsöffnungen austretenden Luftstrom wurde speziell für die Ernte empfindlicher und bodennah wachsender Kulturen entwickelt. Durch den kontrollierten Luftaustritt am Messerbalken werden einzelne Körner, Ähren oder Schoten des Ernteguts schonend auf die Bandfördervorrichtung geblasen und können von dort nicht mehr vom Bandschneidwerk herunterrollen. Ohne den zusätzlichen Luftförderimpuls mögliche Ertragsverluste werden auf diese Weise verringert.

Die Herstellung des Bandschneidwerks mit dem zusätzlichen Luftfördersystem ist aufwendig, weil es sich bei den Komponenten für das Luftfördersystem um spezielle Bauteile handelt, die aufwendig sind in der Herstellung und Montage. Der Luftkanal ist beispielsweise als ein geschlossenes Kastenprofil mit darin ausgebildeten Luftaustrittsöffnungen ausgebildet, an dem der Messerbalken befestigt ist. Durch die vielen Sonderteile ist das gattungsgemäße Bandschneidwerk ein eigener Bandschneidwerkstyp, der gesondert in der Fertigung, Logistik und technischen Dokumentation berücksichtigt werden muss.

Es ist die Aufgabe der vorliegenden Erfindung, die Komplexität eines mit einem Luftfördersystem versehenen Bandschneidwerks zu verringern und die Herstellkosten zu senken.

Die Aufgabe wird für eine gattungsgemäßes Bandschneidwerk durch die Merkmale des Anspruchs 1 gelöst.

Durch die Umrüstungsschnittstelle ist es möglich, ein herkömmliches Bandschneidwerk auf einfache Weise mit einem Luftfördersystem auszustatten. Es ist möglich, die Messerwinkelkonstruktion zur Halterung des Messerbalkens eines herkömmlichen Bandschneidwerks auch dann beizubehalten, wenn das herkömmliche Bandschneidwerk mit einem Luftfördersystem ausgestattet werden soll. Die Messerwinkelkonstruktion ist üblicherweise sehr stabil ausgeführt, um auch bei Anstößen des Messerbalkens am Boden oder Hindernissen wie Steinen nicht beschädigt zu werden. Diese kann nun auch dann in gleicher Weise beibehalten werden, wenn ein Bandschneidwerk mit einem Luftfördersystem versehen werden soll. In einem solchen Fall genügt es, anstelle eines den Hohlraum abdeckenden Abdeckprofilblechs das Winkelprofilblech in den Einbauraum der Umrüstungsschnittstelle einzusetzen. Es ist möglich, zunächst nur Rumpfmaschinen zu produzieren und einzulagern, die erst kurz vor ihrer Auslieferung in ihrer vom jeweiligen Kunden gewünschten endgültigen Spezifikation endausgerüstet werden müssen. Das erhöhte Flexibilität in der Fertigungs- und Absatzplanung.

Bei dem Winkelprofilblech handelt es sich um ein kostengünstig herstellbares Blechteil, das den Hohlraum und damit auch den Luftkanal mit seinen Schenkeln zumindest teilweise umgrenzt. Da das Winkelprofilblech nun keine statischen Aufgaben mehr zur Halterung des Messerbalkens erfüllen muss, kann das Winkelprofilblech erheblich leichter und kostengünstiger gestaltet werden.

Aber auch das Abdeckprofilblech ist kostengünstig herstellbar, da es nur die Funktion abdeckt, die Umrüstungsschnittstelle mit der darunter befindlichen Messerwinkelkonstruktion zu überdecken. Da der Übergangsbereich vom Messerbalken zu der Oberfläche der Bandfördervorrichtung sowieso möglichst glatt und hindernisfrei gestaltet werden sollte, um eine gute Übergabe des Ernteguts vom Messerbalken auf die Bandfördervorrichtung sicherzustellen, ist dort sowieso ein günstig gestaltetes Abdeckblech erforderlich, um die Messerwinkelkonstruktion zu überdecken. Bei den herkömmlichen Bandschneidwerken ohne ein Luftfördersystem entsteht also durch die Ausbildung der Umrüstungsschnittstelle allenfalls ein geringer Mehraufwand. Dafür kann darauf verzichtet werden, einen gesonderten Typen eines Bandschneidwerks herzustellen, wenn dieses mit einem Luftfördersystem ausgestattet werden soll.

Zur Befestigung des Winkelprofilblechs und des Abdeckprofilblechs im Bereich der Messerwinkelkonstruktion sind Verbindungpunkte vorgesehen, die für beide Profilbleche in gleicher Weise nutzbar sind. Die Verbindungspunkte sollen lösbar ausgeführt werden, sodass es auch nach der Herstellung eines kompletten Bandschneidwerks möglich ist, dieses nachträglich auf einfache Weise mit einem Luftfördersystem zu versehen, oder das Luftfördersystem abzubauen, um das Bandschneidwerk auf herkömmliche Weise betreiben zu können. Die Verbindungspunkte können als Schraubaufnahmen, Clips- und/oder Klemmhalterungen, Bajonettverschlüsse, Langlochführungen mit Verriegelung und dergleichen ausgebildet sein. Dadurch ist die Umrüstung mit geringem Zeitaufwand und gegebenenfalls sogar werkzeuglos möglich.

Ein leicht an- und abbaubares Winkelprofilblech ist auch insoweit vorteilhaft, als der Luftkanal schnell und einfach gereinigt werden kann. Wenn beim Einsatz eines Bandschneidwerks mit einem Gebläse Luft aus der Umgebung des Bandschneidwerks angesaugt wird, ist es unvermeidlich, dabei auch im Luftstrom transportierte Erntegutreste anzusaugen. Diese vom Gebläse angesaugten Erntegutreste können sich im Luftkanal ansammeln und dabei auch die Luftaustrittsöffnungen von innen her zusetzen. Bei einem Luftkanal, der als geschlossenes Kastenprofil mit Luftaustrittsöffnungen ausgebildet ist, sind die Luftaustrittsöffnungen über die Länge des Kastenprofils hinweg schwer von innen her zugänglich. Dies ist bei einem Winkelprofilblech, das vom Bandschneidwerk abgebaut worden ist, viel einfacher. Das Winkelprofilblech kann nach seiner Demontage mit einem Luftdruckreiniger auf seiner dem Hohlraum zugewandten Seite schnell sauber geblasen werden. Genauso kann auch der Hohlraum, der vom Winkelprofilblech abgedeckt wird, schnell und einfach ausgeblasen werden, weil er dann gut zugänglich ist. Die dauerhafte Betriebssicherheit des Luftfördersystems wird durch den verringerten Wartungsaufwand erheblich verbessert.

Wenn in der vorliegenden Beschreibung von "vorne" und "hinten" die Rede ist, so bezieht sich das auf die Arbeitsrichtung des an eine Erntemaschine angebauten Bandschneidwerks. "Vorne" ist dabei die Richtung, in die die Erntemaschine in den bestehenden Bestand des Ernteguts fährt, um zu ernten, dies ist auch die Arbeitsrichtung. "Hinten" ist dieser Richtung entgegengesetzt. Soweit in dieser Beschreibung von Profilblechen die Rede ist, müssen diese nicht notwendigerweise aus einem Metall hergestellt sein, sondern es sind auch andere Materialien möglich, wie beispielsweise ein faserverstärkter oder ein herkömmlicher Kunststoff.

Nach einer Ausgestaltung der Erfindung weist die Messerwinkelkonstruktion einen Querträger auf, der mit zumindest einem mit dem Rahmen verbundenen Tragarm verbunden ist, der Querträger weist eine mit ihrer Flachseite in Arbeitsrichtung des Bandschneidwerks weisende Stirnwand auf, die an ihrem oberen Ende entgegen der Arbeitsrichtung des Bandschneidwerks umgekantet und so weit nach hinten geführt ist, dass sie den vorderen Rand des oberen Trums der hinter der Stirnwand umlaufenden Bandfördervorrichtung übergreift, an der Frontseite der Stirnwand ist eine Montageplatte befestigt, die sich in einer zumindest annähernd horizontalen Richtung erstreckt und an derem vorderen Ende der Messerbalken befestigt ist, die Stirnwand weist zumindest eine Mündungsöffnung auf, in die ein Längsrohr eingesteckt ist, das sich vom hinteren Rahmen bis zur Stirnwand erstreckt, die Mündungsöffnung ist oberhalb der Montageplatte in der Stirnwand ausgebildet und die oberhalb der Montageplatte befindliche Stirnwand und die nach oben weisende Seite der Montageplatte begrenzen räumlich den Bereich der Umrüstungsschnittstelle. Die vorgeschlagene Ausbildung und Anordnung der Bestandteile der Messerwinkelkonstruktion ermöglicht eine hochfeste, gleichwohl vergleichsweise leichte Ausführung der Messerwinkelkonstruktion, die sowohl eine stabile Unterkonstruktion zur Befestigung und Halterung des Messerbalkens bereitstellt als auch eine räumliche Begrenzung der Umrüstungsschnittstelle bildet. Zusätzliche Bauteile sind dafür nicht erforderlich. Sowohl das Winkelprofilblech als auch das Abdeckprofilblech werden in ihrer Montageposition von der Montageplatte nach unten hin gut abgestützt. Die Stirnwand bildet eine zweite Abstützung aus, über die das jeweils verwendete Winkelprofilblech oder das Abdeckprofilblech an ihrem hinteren Ende gut abgestützt sind. An der Stirnwand und/oder der Montageplatte können die Verbindungspunkte ausgebildet sein, über die das Winkelprofilblech und das Abdeckprofilblech mit dem Bandschneidwerk verbunden werden. Wenn die Längsrohre, die jeweils in eine Mündungsöffnung eingesteckt sind, als jeweiliger Luftführungskanal des Luftfördersystems genutzt werden, an die ein Gebläse des Luftfördersystems angeschlossen ist, sind die Mündungsöffnungen ebenfalls bereits in die Umrüstungsschnittstelle integriert, ohne dass es dafür eines Umbaus der Bauteile der Umrüstungsschnittstelle bedarf. Unabhängig von der Frage, ob die Längsrohre als Luftführungskanal genutzt werden, verbinden sie zumindest die Messerwinkelkonstruktion mit dem hinteren Rahmen des Bandschneidwerks, wodurch die Abstützung der Messerwinkelkonstruktion am hinteren Rahmen jedenfalls verbessert wird. Der Tragarm kann beweglich oder starr mit dem übrigen Rahmen des Bandschneidwerks verbunden sein.

Nach einer Ausgestaltung der Erfindung sind das Winkelprofilblech und das Abdeckprofilblech in ihrer jeweiligen Montageposition über die Verbindungspunkte mit ihrem vorderen unteren Ende in einem Bereich zwischen dem hinteren Ende des Messerbalkens und der Stirnwand dichtend auf der Oberseite der Montageplatte aufliegend gehalten und erstrecken sich von dort bis zumindest annähernd in die maximale Höhe der Stirnwand und in Längsrichtung entgegen der Arbeitsrichtung des Bandschneidwerks gesehen bis zumindest annähernd an die Stirnwand heran oder überlappen diese. Durch die dichtende Anlage der Profilbleche auf der Oberseite der Montageplatte kann sich dort kein Erntegut aufbauen, sich mit Bauteilen verhaken und dadurch dem Gutfluss stören. Ist auf der Umrüstungsschnittstelle das Winkelprofilblech montiert, so bedeutet die dichtende Anlage auf der Oberseite der Montageplatte auch, dass dort kein Druckverlust im Luftstrom durch entweichende Druckluft auftritt. Für die dichtende Anlage kann das jeweilige Profilblech so ausgebildet sein, dass ein Schenkel in einem Abschnitt planparallel auf der Oberseite der Montageplatte aufliegt. Dieser planparallel aufliegende Schenkel ist auch gut dafür geeignet, über einen oder mehrere Verbindungspunkte mit der Messerwinkelkonstruktion verbunden zu sein. Durch die größere Auflagefläche eines aufliegenden Schenkels ergibt sich im Verhältnis zu einer nur anstoßenden Stirnseite eines Schenkels eine bessere Abdichtwirkung.

Nach einer Ausgestaltung der Erfindung umgrenzt das Winkelprofilblech in seiner Montageposition den Hohlraum in Arbeitsrichtung geschlossen, der Hohlraum ist an seinen stirnseitigen Enden mit den Querschnitt des Winkelprofilblechs an dessen stirnseitigen Enden abdeckenden Abdichtkörpern nach außen abgedichtet und der Hohlraum ist nach unten und hinten zumindest bereichsweise durch die Stirnwand und die Montageplatte umgrenzt. Das Winkelprofilblech muss bei dieser Ausgestaltung den Hohlraum und damit den Luftkanal nur noch nach vorne und oben umgrenzen. Zu den Seiten eines Winkelprofilblechs wird der Luftkanal durch die Abdichtkörper abgedichtet, und nach unten und hinten werden die Stirnwand und die Montageplatte als Bauteile der Messerwinkelkonstruktion für die Einhausung des Hohlraums und damit des Luftkanals genutzt. Der Bauaufwand für die Herstellung eines Luftkanals wird dadurch minimiert.

Nach einer Ausgestaltung der Erfindung übergreift das Winkelprofilblech in seiner Montageposition mit seinem hinteren Ende die obere Kante der Stirnwand und in dem die Stirnwand übergreifenden Abschnitt sind Luftaustrittsöffnungen ausgebildet. Durch die Ausbildung der Luftaustrittsöffnungen im oberen Bereich des Winkelprofilblechs tritt der Luftstrom aus dem Luftfördersystem genau dort aus dem Luftkanal aus, wo ein Herabfallen von Erntegut von den Bandfördervorrichtungen nach vorne hin vermieden werden soll. Da der Luftstrom im Bereich der Austrittsöffnungen seine höchste Strömungsgeschwindigkeit hat, befördert er hier Erntegutbestandteile am effektivsten in Richtung der Bandfördervorrichtung. Das hintere Ende des Winkelprofilblechs kann dabei so weit nach hinten geführt sein, dass es in einem Abschnitt in einem Abstand und zumindest annähernd parallel zu dem Abschnitt der Stirnwand verläuft, der an ihrem oberen Ende entgegen der Arbeitsrichtung des Bandschneidwerks umgekantet und so weit nach hinten geführt ist, dass er den vorderen Rand des oberen Trums der hinter der Stirnwand umlaufenden Bandfördervorrichtung übergreift. Dadurch entsteht zwischen dem Winkelprofilblech und dem nach hinten umgekanteten Abschnitt der Stirnwand ein Strömungskanal für den Luftstrom, in dem dieser in Strömungsrichtung gleichgerichtet und fokussiert wird.

Nach einer Ausgestaltung der Erfindung weist das Winkelprofilblech auf seiner in Arbeitsrichtung weisenden Seite eine Sicke auf, die sich über die Länge des Winkelprofilblechs erstreckt und deren Boden in der Montageposition des Winkelprofilblechs tiefer liegt als ein in Arbeitsrichtung benachbarter Abschnitt des Winkelprofilblechs. Die Sicke bildet bei dieser Ausgestaltung einer Auffangzone, in der Erntegut aufgefangen werden kann, dass an der in Arbeitsrichtung weisenden Seite des Winkelprofilblechs herabrutscht und vor dem Messerbalken auf den Boden zu fallen droht. Das in der Sicke aufgefangene Erntegut kann dann von nachfolgendem über das Winkelprofilblech streifende Erntegut mit auf die benachbarte Bandfördervorrichtung genommen werden, sodass es keinen Verlust darstellt.

Nach einer Ausgestaltung der Erfindung sind Verbindungspunkte im Bereich der Sicke in der Weise ausgeführt, das ein Klemmstück auf einen ortsfest montierten Bolzen aufgesteckt und mit einer Spannschraube von außen auf das Abdeckprofilblech oder das Winkelprofilblech aufgespannt ist, wobei das Klemmstück in seiner Umfangskontur an die Raumform der Sicke angepasst ist. Das Klemmstück kann insbesondere aus einem flexiblen Material bestehen, wie beispielsweise einem Gummi oder einem polymeren Werkstoff.

Nach einer Ausgestaltung der Erfindung weisen die Längsrohre Anschlussstutzen auf, durch die ein von einem Gebläse erzeugten Luftstrom in den Innenraum der Längsrohre eingeleitet werden kann, und die Längsrohre sind dadurch ein Bestandteil des Luftfördersystems, indem sie den eingeleiteten Luftstrom durch ihren Innenraum hindurch bis in den Bereich der Mündungsöffnung in der Messerwinkelkonstruktion leiten, und die Längsrohre bilden gleichzeitig einen Bestandteil der Abstützvorrichtung zur Abstützung der Bandfördervorrichtung, indem auf die Längsrohre Gleitleisten aufgelegt sind, die sich in einer Richtung quer zur Arbeitsrichtung des Bandschneidwerks erstrecken und über die das obere Trum der Bandfördervorrichtung bei ihrem Umlauf gleitet. Die Längsrohre sind also auch schon in dem herkömmlichen Bandschneidwerk fest verbaut und sind dort jedenfalls ein Bestandteil der Abstützvorrichtung zur Abstützung der Bandfördervorrichtung. Wenn das Schneidwerk mit einem Luftfördersystem versehen werden soll, bilden die Längsrohre die Luftführungskanäle, mit denen der von einem Gebläse erzeugte Luftstrom aus einem Bereich hinter dem Bandschneidwerk in den Bereich der Messerwinkelkonstruktion befördert wird. Um ein herkömmliches Bandschneidwerk mit einem Luftfördersystem auszustatten, ist es deshalb nicht mehr erforderlich, gesonderte Luftführungskanäle in dem Bandschneidwerk zu montieren. Es genügt vielmehr, an den Längsrohren die Anschlussstutzen zu montieren und diese mit den zusätzlich zu montierenden Gebläsen zu verbinden. Der Umrüstungsaufwand wird dadurch minimiert.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf eine Erntemaschine mit einem Bandschneidwerk aus einer Ansicht von schräg oben,
- Fig. 2:: eine Schnittansicht auf einen Bandschneidwerk im Bereich der Messerwinkelkonstruktion,
- Fig. 3:: eine Ansicht auf ein Bandschneidwerk von vorne bei demontierten Profilblechen,
- Fig. 4:: eine Ansicht auf einen Ausschnitt eines Bandschneidwerks von unten,
- Fig. 5:: eine Ausschnittsansicht auf ein Bandschneidwerk mit eingesetztem Winkelprofilblech, und
- Fig. 6:: eine Schnittansicht auf das Bandschneidwerk zur Darstellung der Luftführung.

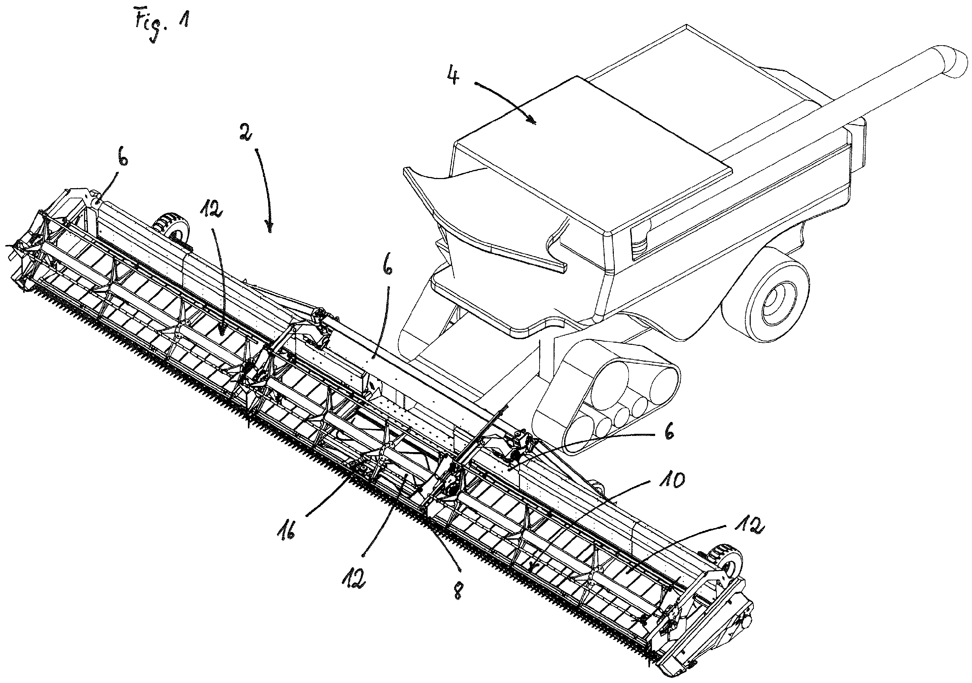

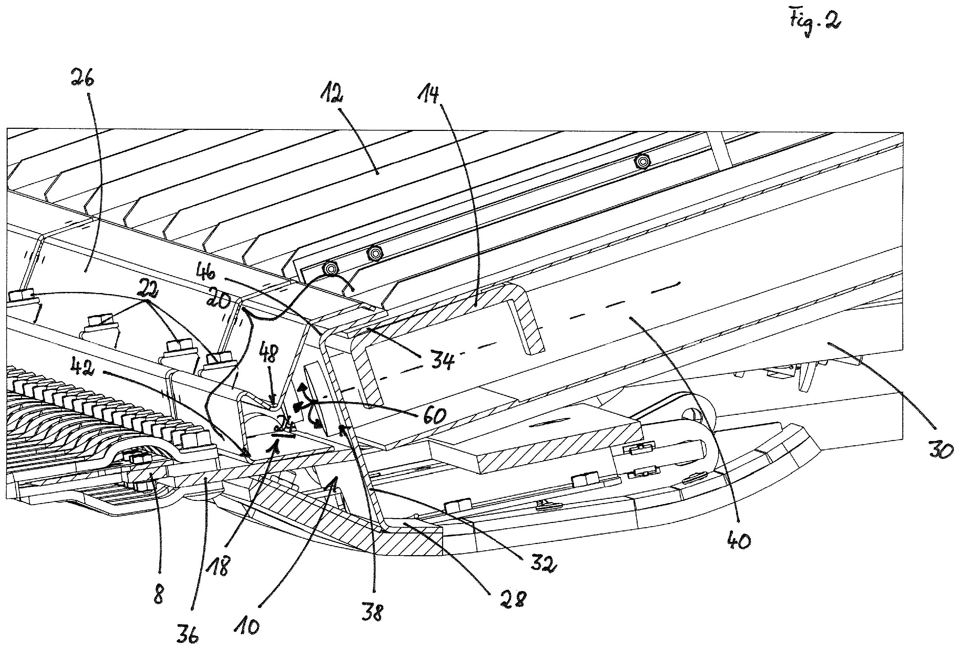

In Fig. 1 ist eine Ansicht auf eine Erntemaschine 4 mit einem Bandschneidwerk 2 aus einer Ansicht von schräg oben gezeigt. Das Bandschneidwerk 2 hat einen Rahmen 6, der die Gesamtkonstruktion trägt. Am vorderen Ende des Bandschneidwerks 2 befindet sich ein Messerbalken 8, mit dem das Erntegut geschnitten wird. Der Messerbalken 8 ist an einer Messerwinkelkonstruktion 10 befestigt, die näher in Figur 2 dargestellt ist. Das geschnittene Erntegut wird auf die Bandfördervorrichtungen 12 abgeworfen und von diesen zunächst mittig zusammengetragen, wonach es dann nach hinten an die Erntemaschine 4 abgegeben wird. Unterhalb des oberen Trums der Bandfördervorrichtungen 12 befindet sich eine Abstützvorrichtung 14, die in Figur 1 allerdings nicht gezeigt ist.

Die Fig. 2 zeigt eine Schnittansicht auf einen Bandschneidwerk 2 im Bereich der Messerwinkelkonstruktion 10. Die Umrüstungsschnittstelle 18 befindet sich im Bereich der Messerwinkelkonstruktion 10. In dem Einbauraum 20 befindet sich in dem in Figur 2 gezeigten Ausführungsbeispiel ein Abdeckprofilblech 26, dass an Verbindungspunkten 22 mit der Messerwinkelkonstruktion 10 über Verschraubungen lösbar verbunden ist. Das Abdeckprofilblech 26 begrenzt nach vorne und oben einen Hohlraum 24. Das Abdeckprofilblech 26 ist nach vorne und oben hin geschlossen. Nach hinten wird der Hohlraum 24 von der Stirnwand 32 des Querträgers 28 begrenzt, der an einem Tragarm 30 gehalten ist. Der Tragarm 30 ist an seinem hinteren Ende mit dem Rahmen 6 verbunden.

Die Stirnwand 32 des Querträgers 28 weist mit ihrer Flachseite in Arbeitsrichtung des Bandschneidwerks 2. Die Stirnwand 32 ist an ihrem oberen Ende entgegen der Arbeitsrichtung des Bandschneidwerks 2 umgekantet und mit dem so ausgebildeten Schenkel so weit nach hinten geführt, dass dieser Schenkel den vorderen Rand 34 des oberen Trums der hinter der Stirnwand 32 umlaufenden Bandfördervorrichtung 12 übergreift.

An der Frontseite der Stirnwand 32 ist eine Montageplatte 36 befestigt, die sich in einer zumindest annähernd horizontalen Richtung erstreckt und an deren vorderem Ende der Messerbalken 8 befestigt ist. Nach unten hin ist der Hohlraum 24 von der Montageplatte 36 begrenzt. Der Einbauraum 20 befindet sich im Bereich zwischen der Oberseite der Montageplatte 36 und der Stirnwand 32. In diesem Bereich ist das Abdeckprofilblech 26 auf die Messerwinkelkonstruktion 10 aufgesetzt und deckt mit seinen Schenkeln den unter dem Abdeckprofilblech 26 befindlichen Hohlraum 24 ab.

Im Ausführungsbeispiel ist das Abdeckprofilblech 26 so ausgeführt, dass es in seiner Montageposition mit seinem oberen hinteren Ende die obere Kante 46 der Stirnwand 32 und bereichsweise auch noch den Schenkel des Querträgers 28 übergreift. Der Hohlraum 24 setzt sich auf diese Weise bis in den Spalt hinein fort, der zwischen dem oberen hinteren Ende des Abdeckprofilblechs 26 und dem gegenüberliegenden Schenkel des Querträgers 28 ausgebildet ist. Das Abdeckprofilblech 26 bildet in diesem Bereich eine erhöhte Schwelle zum unteren Rand der Bandfördervorrichtung 12 aus, die dazu dient, auf der Bandfördervorrichtung 12 befindliches Erntegut passiv davon abzuhalten, von der Bandförderervorrichtung 12 wieder auf den Ackerboden zu fallen.

Das Abdeckprofilblech 26 weist auf seiner in Arbeitsrichtung weisenden Seite eine Sicke 48 auf, die sich über die Länge des Abdeckprofilblechs 26 erstreckt und deren Boden in der Montageposition des Abdeckprofilblechs 26 tiefer liegt als ein in Arbeitsrichtung benachbarter Abschnitt des Abdeckprofilblechs 26. die Sicke 48 dient dem Zweck, Körner und Ähren aufzufangen, die sonst auf den Ackerboden fallen würden.

Die Stirnwand 32 des Querträgers 28 weist einige Mündungsöffnungen 38 auf, in die Längsrohre 40 eingesteckt sind. Die Längsrohre 40 dienen als Abstützung für die Abstützvorrichtung 14. Die Abstützvorrichtung 14 kann aus einer Profilleiste bestehen, deren Flachseite nach oben liegt und auf der das obere Trum der Bandfördervorrichtung 12 abgestützt umläuft. Die seitlichen Schenkel der Profilleiste der Abstützvorrichtung 14 weisen Ausschnitte auf, die zur Querschnittsform der Längsrohre 40 passen. Mit den Ausschnitten ist die Profilleiste auf die Längsrohre 40 aufgelegt, sie wird dadurch formschlüssig in ihrer Einbaulage gehalten. Wenn abweichend von der in Figur 2 dargestellten Ausführung anstelle des Abdeckprofils 26 das Winkelprofilblech 50 in dem Einbauraum 20 montiert ist, können die Längsrohre 40 wie in Fig. 2 gezeigt dazu genutzt werden, einen Luftstrom 60 von einem im hinteren Bereich des Bandschneidwerks 2 angeordneten Gebläse durch die Mündungsöffnung 38 hindurch in den Hohlraum 24 zu leiten.

Das Abdeckprofilblech 26 ist mit seinem vorderen unteren Ende 42 dichtend auf der Oberseite der Montageplatte 36 aufliegend gehalten. Auf diese Weise kann vom Messerbalken 8 her keinen Schmutz in den Hohlraum 24 eindringen. Wenn der Hohlraum 24 mit einem anstelle des Abdeckprofilblechs 26 montierten Winkelprofilblechs 50 als ein Luftkanal genutzt wird, kann aus dem Hohlraum 24 auch keine Luft in Richtung des Messerbalkens 8 ausströmen.

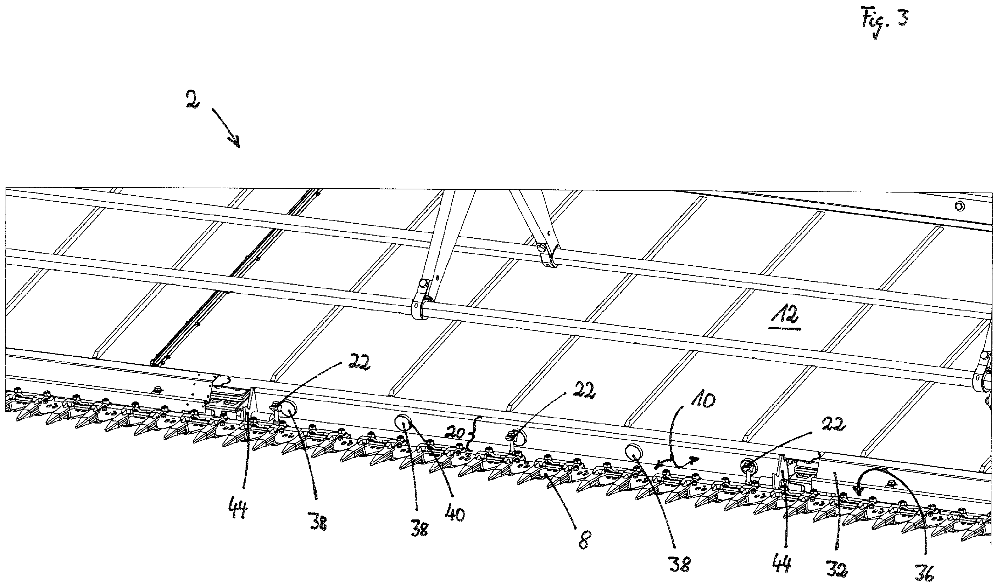

In Fig. 3 ist eine Ansicht auf ein Bandschneidwerk 2 von vorne bei demontierten Profilblechen 26, 50 gezeigt. Die Stirnwand 32 und die Montageplatte 36 sind gut erkennbar, die mit ihren Oberflächen den Hohlraum 24 nach unten und nach hinten begrenzen. In Figur 3 sind auch die Abdichtkörper 44 zu sehen, auf die ein Abdeckprofilblech 26 oder ein Winkelprofilblech 50 aufgelegt werden können. Der von den Profilen nach oben und vorne abgedichtete Hohlraum 24 ist dann in Querrichtung durch die Abdichtkörper 44 begrenzt, sodass dort der Luftstrom 60 nicht aus dem Hohlraum 24 austreten und von dort aus auch keinen Schmutz in diesen eindringen kann.

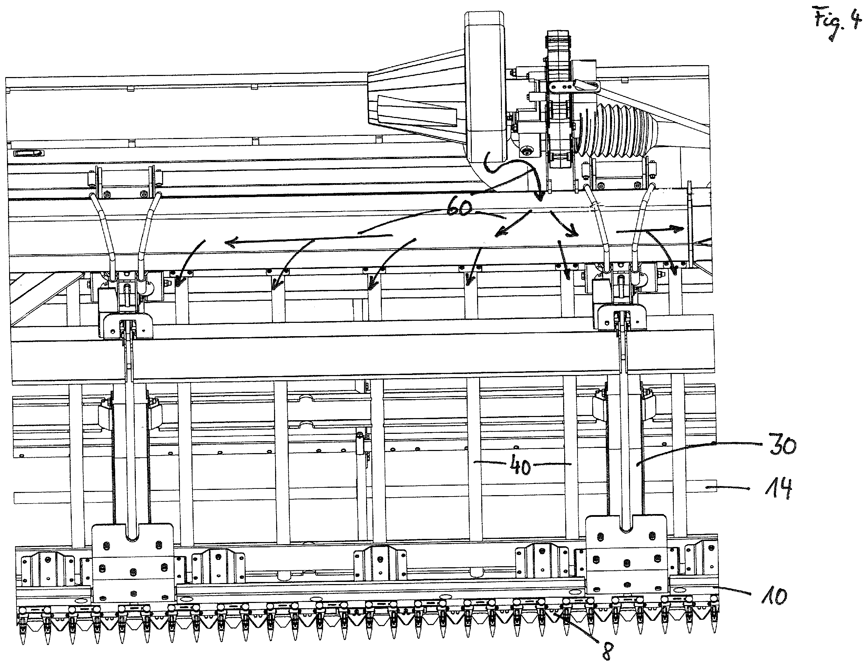

In Fig. 4 ist eine Ansicht auf einen Ausschnitt eines Bandschneidwerks 2 von unten gezeigt. In der Ansicht von unten sind die Abstützvorrichtung 14, die Tragarme 30, die Längsrohre 40 sowie der Messerbalken 8 mit der Messerwinkelkonstruktion 10 gut erkennbar. Im hinteren Bereich des Bandschneidwerks 2 befindet sich ein Gebläse, dass einen Luftstrom 60 erzeugt, der über ein quer zur Arbeitsrichtung des Bandschneidwerks ausgerichtetes Verteilerrohr in die Längsrohre 40 gelangt und von diesen nach vorne bis in den Hohlraum 24 geleitet wird.

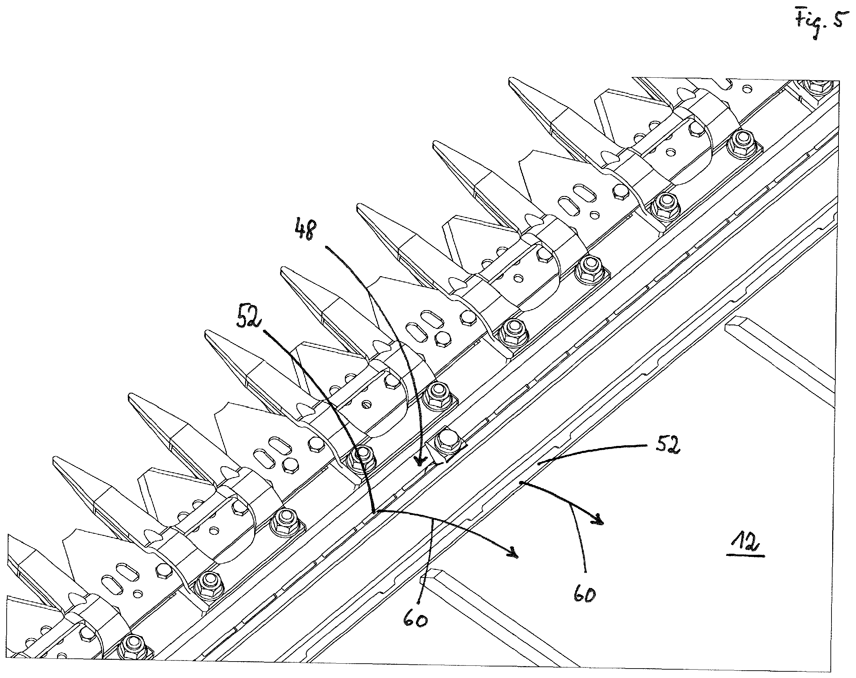

Die Fig. 5 zeigt eine Ausschnittsansicht auf ein Bandschneidwerk 2 mit einem eingesetztem Winkelprofilblech 50. Das Winkelprofilblech 50 verfügt über eine größere Anzahl von Luftaustrittsöffnungen 52. Eine erste Reihe von Luftaustrittsöffnungen 52 befinden sich in der Sicke 48. Diese Luftaustrittsöffnungen 52 können aus dem Winkelprofilblech 50 ausgestanzt oder ausgelasert sein. Ein Luftstrom 60, der durch die Längsrohre 40 in den Hohlraum 24 gelangt, kann durch diese Luftaustrittsöffnungen 52 nach außen treten. Der Hohlraum 24 verteilt den Luftstrom 60 in Querrichtung und dient als Luftkanal, um die Luft den Luftaustrittsöffnungen 52 zuzuleiten.

Weitere Luftaustrittsöffnungen 52 befinden sich an der Hinterkante des Winkelprofilblechs 50. Hier genügt es, dass die Hinterkante des Winkelprofilblechs 50 ungerade ausgeschnitten ist. Einen Teil der dort ausgebildeten Luftaustrittsöffnungen 52 wird von dem nach hinten umgekanteten Schenkel des Querträgers 28 begrenzt.

Die Luftaustrittsöffnungen 52 sind so angeordnet und ausgebildet, dass sie einen aus dem Luftkanal durch die Luftaustrittsöffnungen 52 austretenden Luftstrom 60 in Richtung der nach oben weisenden Oberfläche der Bandfördervorrichtungen 12, in einen darüber befindlichen Raum und/oder in eine Richtung nach oben richten.

Das Winkelprofilblech 50 weist auf seiner in Arbeitsrichtung weisenden Seite eine Sicke 48 auf, die sich über die Länge des Winkelprofilblechs 50 erstreckt und deren Boden in der Montageposition des Winkelprofilblechs 50 tiefer liegt als ein in Arbeitsrichtung benachbarter Abschnitt des Winkelprofilblechs 50.

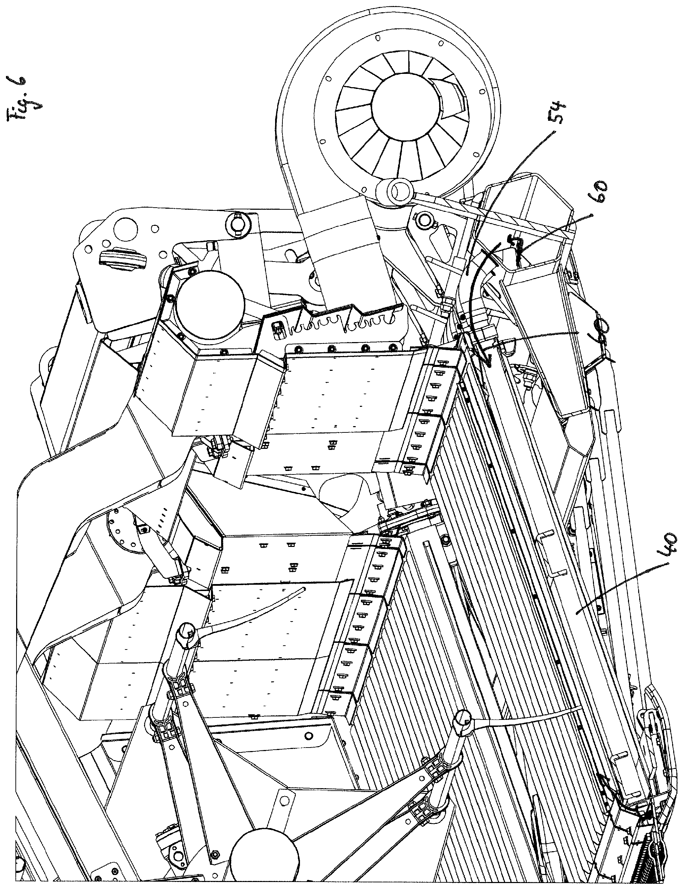

Bei einem Vergleich der Figuren 2 und 5 ist erkennbar, dass in beiden Abbildungen in den Einbauraum 20 jeweils ein Profilblech eingesetzt ist, und zwar im Fall der Figur 2 das Abdeckprofilblech 26 und im Fall der Figur 5 das Winkelprofilblech 50. Während das Abdeckprofilblech 26 geschlossen ist und auf diese Weise den Hohlraum 24 nach vorne und oben vollständig abdeckt, verfügt das Winkelprofilblech 50 über Luftaustrittsöffnungen 52, durch die jeweils ein Luftstrom 60 in Richtung der Bandfördervorrichtung 12 austreten kann. In beiden Fällen ist die Umrüstungsschnittstelle 18 dazu genutzt worden, den Bereich der Messerwinkelkonstruktion 10 im Bereich des Übergangs vom Messerbalken 8 zur Bandförderervorrichtung 12 abzudecken. Je nachdem, ob als Profilblech das Abdeckprofilblech 26 oder das Winkelprofilblech 50 verwendet ist, verfügt das Bandschneidwerk 2 über eine bloße Abdeckung in diesem Bereich, oder es ist mit einem aktiven Gebläse ausgestattet, mit dem Erntegut in Richtung der Bandförderervorrichtung 12 geblasen werden kann. In Fig. 6 ist eine Schnittansicht auf das Bandschneidwerk 2 zur Darstellung der Luftführung gezeigt. Der Luftstrom 60 strömt aus dem Verteilerrohr über einen Anschlussstutzen 54 in das Längsrohr 40. Am vorderen Ende des Längsrohres 40 verteilt sich der Luftstrom 60 im Hohlraum 24 als Luftkanal und strömt von dort aus durch die Luftaustrittsöffnungen 52 in Richtung der Bandförderervorrichtung 12.

Die Erfindung ist nicht auf die vorstehenden Ausführungsbeispiele beschränkt.

### Bezugsziffernliste

- 2: Bandschneidwerk
- 4: Erntemaschine
- 6: Rahmen
- 8: Messerbalken
- 10: Messerwinkelkonstruktion
- 12: Bandfördervorrichtung
- 14: Abstützvorrichtung
- 16: Antriebsvorrichtung
- 18: Umrüstungsschnittstelle
- 20: Einbauraum
- 22: Verbindungspunkt
- 24: Hohlraum
- 26: Abdeckprofilblech
- 28: Querträger
- 30: Tragarm
- 32: Stirnwand
- 34: Rand
- 36: Montageplatte
- 38: Mündungsöffnung
- 40: Längsrohr
- 42: vorderes unteres Ende
- 44: Abdichtkörper
- 46: Kante
- 48: Sicke
- 50: Winkelprofilblech
- 52: Luftaustrittsöffnung
- 54: Anschlussstutzen
- 56: Gleitleiste
- 58: Formstück
- 60: Luftstrom

## Patentansprüche

1. Bandschneidwerk (2) zum Anbau an eine Erntemaschine (4) mit einem Rahmen (6), einem Messerbalken (8), einer Messerwinkelkonstruktion (10) zur Halterung des Messerbalkens (8), Bandfördervorrichtungen (12) zum Abfördern des geschnittenen Halmguts mit einer Abstützvorrichtung (14) und Antriebsvorrichtungen (16) zum Antrieb des Messerbalkens (8) und der Bandfördervorrichtungen (12), oberhalb der Messerwinkelkonstruktion (10) ist eine Umrüstungsschnittstelle (18) ausgebildet, in der in einen dafür vorgesehenen Einbauraum (20) über identische Verbindungspunkte (22) ein Winkelprofilblech (50) oder ein Abdeckprofilblech (26) lösbar eingebaut ist, wobei sich unterhalb des Winkelprofilblechs (50) oder des Abdeckprofilblechs (26) ein Hohlraum (24) befindet, der bei Verwendung des Winkelprofilblechs (50) als Luftkanal dient, das Winkelprofilblech (50) umgrenzt Luftaustrittsöffnungen (52), die so angeordnet und ausgebildet sind, dass sie einen aus dem Luftkanal durch die Luftaustrittsöffnungen (52) austretenden Luftstrom (60) in Richtung der nach oben weisenden Oberfläche der Bandfördervorrichtungen (12), in einen darüber befindlichen Raum und/oder in eine Richtung nach oben richten, und das Abdeckprofilblech (26) ist so ausgestaltet, dass es den Hohlraum (24) geschlossen abdeckt.

2. Bandschneidwerk (2) nach Anspruch 1, **dadurch gekennzeichnet, dass** die Messerwinkelkonstruktion (10) einen Querträger (28) aufweist, der mit zumindest einem mit dem Rahmen (6) verbundenen Tragarm (30) verbunden ist, der Querträger (28) eine mit ihrer Flachseite in Arbeitsrichtung des Bandschneidwerks (2) weisende Stirnwand (32) aufweist, die an ihrem oberen Ende entgegen der Arbeitsrichtung des Bandschneidwerks (2) umgekantet und so weit nach hinten geführt ist, dass sie den vorderen Rand (34) des oberen Trums der hinter der Stirnwand (32) umlaufenden Bandfördervorrichtung (12) übergreift, an der Frontseite der Stirnwand (32) eine Montageplatte (36) befestigt ist, die sich in einer zumindest annähernd horizontalen Richtung erstreckt und an derem vorderen Ende der Messerbalken (8) befestigt ist, die Stirnwand (32) zumindest eine Mündungsöffnung (38) aufweist, in die ein Längsrohr (40) eingesteckt ist, das sich vom hinteren Rahmen (6) bis zur Stirnwand (32) erstreckt, die Mündungsöffnung (38) oberhalb der Montageplatte (36) in der Stirnwand (32) ausgebildet ist und die oberhalb der Montageplatte (36) befindliche Stirnwand (32) und die nach oben weisende Seite der Montageplatte (36) räumlich den Bereich der Umrüstungsschnittstelle (18) begrenzen.

3. Bandschneidwerk (2) nach Anspruch 1 oder 2, **dadurch gekennzeichnet, dass** das Winkelprofilblech (50) oder das Abdeckprofilblech (26) in ihrer jeweiligen Montageposition über die Verbindungspunkte (22) mit ihrem vorderen unteren Ende (42) in einem Bereich zwischen dem hinteren Ende des Messerbalkens (8) und der Stirnwand (32) dichtend auf der Oberseite der Montageplatte (36) aufliegend gehalten ist und sich von dort bis zumindest annähernd in die maximale Höhe der Stirnwand (32) und in Längsrichtung entgegen der Arbeitsrichtung des Bandschneidwerks (2) gesehen bis zumindest annähernd an die Stirnwand (32) heran erstrecken oder diese überlappen.

4. Bandschneidwerk (2) nach einem der vorhergehenden Ansprüche, **dadurch gekennzeichnet, dass** das Winkelprofilblech (50) in seiner Montageposition den Hohlraum (24) in Arbeitsrichtung geschlossen umgrenzt, der Hohlraum (24) an seinen stirnseitigen Enden mit den Querschnitt des Winkelprofilblechs (50) an dessen stirnseitigen Enden abdeckenden Abdichtkörpern (44) nach außen abgedichtet ist und der Hohlraum (24) nach unten und hinten zumindest bereichsweise durch die Stirnwand (32) und die Montageplatte (36) umgrenzt ist.

5. Bandschneidwerk (2) nach Anspruch 3 und 4, **dadurch gekennzeichnet, dass** das Winkelprofilblech (50) in seiner Montageposition mit seinem hinteren Ende die obere Kante (46) der Stirnwand (32) übergreift und in dem die Stirnwand (32) übergreifenden Abschnitt Luftaustrittsöffnungen (52) ausgebildet sind.

6. Bandschneidwerk (2) nach einem der vorhergehenden Ansprüche, **dadurch gekennzeichnet, dass** das Winkelprofilblech (50) auf seiner in Arbeitsrichtung weisenden Seite eine Sicke (48) aufweist, die sich über die Länge des Winkelprofilblechs (50) erstreckt und deren Boden in der Montageposition des Winkelprofilblechs (50) tiefer liegt als ein in Arbeitsrichtung benachbarter Abschnitt des Winkelprofilblechs (50).

7. Bandschneidwerk (2) nach Anspruch 6, **dadurch gekennzeichnet, dass** Verbindungspunkte (22) im Bereich der Sicke (48) in der Weise ausgeführt sind, das ein Klemmstück auf einen ortsfest montierten Bolzen aufgesteckt und mit einer Spannschraube von außen auf das Abdeckprofilblech (26) oder das Winkelprofilblech (50) aufgespannt ist, wobei das Klemmstück in seiner Umfangskontur an die Raumform der Sicke angepasst ist.

8. Bandschneidwerk (2) nach einem der vorhergehenden Ansprüche 2 bis 7, **dadurch gekennzeichnet, dass** die Längsrohre (40) Anschlussstutzen (54) aufweisen, durch die ein von einem Gebläse erzeugten Luftstrom (60) in den Innenraum der Längsrohre (40) eingeleitet werden kann, wenn das Winkelprofilblech (50) eingebaut ist, und die Längsrohre (40) dadurch ein Bestandteil eines Luftfördersystem sind, indem sie den eingeleiteten Luftstrom (60) durch ihren Innenraum hindurch bis in den Bereich der Mündungsöffnung (38) in der Messerwinkelkonstruktion (10) leiten, und die Längsrohre (40) gleichzeitig einen Bestandteil der Abstützvorrichtung (14) zur Abstützung der Bandfördervorrichtung (12) bilden, indem auf die Längsrohre (40) Gleitleisten (56) aufgelegt sind, die sich in einer Richtung quer zur Arbeitsrichtung des Bandschneidwerks (2) erstrecken und über die das obere Trum der Bandfördervorrichtung (12) bei ihrem Umlauf gleitet.

## Claims

1. Header with belt conveyor (2) for attachment to a harvesting machine (4), comprising a frame (6), a cutter bar (8), a cutter angling structure (10) for holding the cutter bar (8), belt conveying devices (12) for conveying the cut crop material away, comprising a supporting device (14) and drive devices (16) for driving the cutter bar (8) and the belt conveying devices (12), a conversion interface (18) is formed above the cutter angling structure (10) and has, releasably installed therein via identical connection points (22) in an installation space (20) provided for this purpose, an angle profile plate (50) or a cover profile plate (26), wherein a cavity (24) is disposed below the angle profile plate (50) or the cover profile plate (26) and serves as an air duct during use of the angle profile plate (50), the angle profile plate (50) delimits air outlet openings (52), which are disposed and designed such that they direct an air stream (60) emerging from the air duct through the air outlet openings (52) in the direction of the upwardly pointing surface of the belt conveyor devices (12), into a space disposed thereabove, and/or in a direction upwards, and the cover profile plate (26) is designed such that it covers the cavity (24) in a closed manner.

2. Header with belt conveyor (2) according to Claim 1, **characterized in that** the cutter angling structure (10) has a cross member (28), which is connected to at least one support arm (30) connected to the frame (6), the cross member (28) has an end wall (32) which points with its flat side in the working direction of the header with belt conveyor (2) and which at its upper end is bent counter to the working direction of the header with belt conveyor (2) and is guided to the rear to such an extent that it overlaps the front edge (34) of the upper run of the belt conveying device (12) which runs behind the end wall (32), a mounting plate (36) that is fastened to the front side of the end wall (32) extends in an at least approximately horizontal direction and the cutter bar (8) is fastened to its front end, the end wall (32) has at least one mouth opening (38) into which a longitudinal tube (40) which extends from the rear frame (6) to the end wall (32) is inserted, the mouth opening (38) is formed above the mounting plate (36) in the end wall (32) and the end wall (32) located above the mounting plate (36) and the upwardly facing side of the mounting plate (36) spatially delimit the region of the conversion interface (18).

3. Header with belt conveyor (2) according to Claim 1 or 2, **characterized in that** the angle profile plate (50) or the cover profile plate (26) are held in their respective mounting position by way of the connecting points (22) with their front lower end (42) in a region between the rear end of the cutter bar (8) and the end wall (32) in a sealing manner resting on the upper side of the mounting plate (36) and extend from there up to at least approximately the maximum height of the end wall (32) and, viewed in the longitudinal direction counter to the working direction of the header with belt conveyor (2), up to at least approximately the end wall (32) or overlap the latter.

4. Header with belt conveyor (2) according to one of the preceding claims, **characterized in that** the angle profile plate (50) in its mounting position delimits the cavity (24) closed in the working direction, the cavity (24) is sealed at its end faces to the outside with sealing bodies (44) covering the cross section of the angle profile plate (50) at its front ends, and the cavity (24) is delimited at the bottom and the rear at least in regions by the end wall (32) and the mounting plate (36).

5. Header with belt conveyor (2) according to Claim 3 and 4, **characterized in that** the angle profile plate (50), in its mounting position, engages with its rear end over the upper edge (46) of the end wall (32), and air outlet openings (52) are formed in the section engaging over the end wall (32).

6. Header with belt conveyor (2) according to one of the preceding claims, **characterized in that** the angle profile plate (50) has, on its side facing in the working direction, a bead (48) which extends over the length of the angle profile plate (50) and the base of which, in the mounting position of the angle profile plate (50), is lower than a section of the angle profile plate (50) which is adjacent in the working direction.

7. Header with belt conveyor (2) according to Claim 6, **characterized in that** connection points (22) in the region of the bead (48) are designed in such a way that a clamping piece is mounted on a bolt mounted in a fixed position and is clamped by a clamping screw from the outside onto the cover profile plate (26) or the angle profile plate (50), wherein the circumferential contour of the clamping piece is adapted to the three-dimensional shape of the bead.

8. Header with belt conveyor (2) according to one of preceding Claims 2 to 7, **characterized in that** the longitudinal tubes (40) have connecting pieces (54) through which an air flow (60) generated by a blower can be introduced into the interior of the longitudinal tubes (40), when the angle profile plate 950) is installed, and the longitudinal tubes (40) are a component of an air conveyor system **in that** they guide the introduced air flow (60) through their interior as far as into the region of the mouth opening (38) in the cutter angling structure (10), and the longitudinal tubes (40) simultaneously form a component of the supporting device (14) for supporting the belt conveying device (12) **in that** sliding strips (56) are placed on the longitudinal tubes (40), which sliding strips extend in a direction transverse to the working direction of the header with belt conveyor (2) and over which the upper strand of the belt conveying device (12) slides during its circulation.

## Revendications

1. Mécanisme de coupe en bande (2) destiné à être monté sur une machine de récolte (4) avec un châssis (6), une barre à lames (8), une structure d'angle à lames (10) destinée à maintenir la barre à lames (8), des dispositifs de convoyage à bande (12) destinés à évacuer la paille coupée avec un dispositif de support (14) et des dispositifs d'entraînement (16) destinés à entraîner la barre à lames (8) et les dispositifs de convoyage à bande (12), une interface de rééquipement (18) étant réalisée au-dessus de la structure d'angle à lames (10), dans laquelle une tôle de profil d'angle (50) ou une tôle de profil de recouvrement (26) est montée de manière amovible dans un espace de montage (20) prévu à cet effet par des points de liaison (22) identiques, une cavité (24), qui fait office de canal d'air lors de l'utilisation de la tôle de profil d'angle (50) se trouvant en-dessous de la tôle de profil d'angle (50) ou de la tôle de profil de recouvrement (26), la tôle de profil de profil d'angle (50) délimitant en périphérie des ouvertures de sortie d'air (52) qui sont disposées et sont réalisées de telle sorte qu'elles dirigent un flux d'air (60) sortant du canal d'air par les ouvertures de sortie d'air (52) en direction de la surface pointant vers le haut des dispositifs de convoyage à bande (12), dans un espace se trouvant au-dessus et/ou dans une direction vers le haut, et la tôle de profil de recouvrement (26) étant configurée de telle sorte qu'elle recouvre de manière fermée la cavité (24).

2. Mécanisme de coupe en bande (2) selon la revendication 1, **caractérisé en ce que** la structure d'angle à lames (10) comporte une traverse (28), qui est reliée à au moins un bras porteur (30) relié au châssis (6), la traverse (28) comporte une paroi frontale (32) pointant par son côté plat dans une direction de travail du mécanisme de coupe en bande (2), qui est repliée sur son extrémité supérieure dans le sens opposé à la direction de travail du mécanisme de coupe en bande (2) et est guidée si loin vers l'arrière qu'elle chevauche le bord avant (34) du brin supérieur du dispositif de convoyage à bande (12) tournant derrière la paroi arrière (32), une plaque de montage (36) est fixée sur le côté avant de la paroi frontale (32), laquelle s'étend dans une direction au moins approximativement horizontale et sur l'extrémité avant de laquelle est fixée la barre à lames (8), la paroi frontale (32) comporte au moins une ouverture d'embouchure (38), dans laquelle un tuyau longitudinal (40) est enfiché, lequel s'étend depuis le châssis (6) arrière jusqu'à la paroi frontale (32), l'ouverture d'embouchure (38) est réalisée au-dessus de la plaque de montage (36) dans la paroi frontale (32) et la paroi frontale (32) se trouvant au-dessus de la plaque de montage (36) et le côté pointant vers le haut de la plaque de montage (36) délimitent spatialement la zone de l'interface de rééquipement (18).

3. Mécanisme de coupe à bande (2) selon la revendication 1 ou 2, **caractérisé en ce que** la tôle de profil d'angle (50) ou la tôle de profil de recouvrement (26) est maintenue, dans sa position de montage respective, par les points de liaison (22) par leur extrémité inférieure (42) avant dans une zone entre l'extrémité arrière de la barre à lames (8) et la paroi frontale (32) de manière à reposer de manière étanche sur le côté supérieur de la plaque de montage (36) et s'étendent de là jusqu'au moins approximativement à la hauteur maximale de la paroi frontale (32) et vues dans la direction longitudinale dans le sens opposé à la direction de travail du mécanisme de coupe en bande (2) au moins de manière à s'approcher approximativement de la paroi frontale (32) et la chevauchent.

4. Mécanisme de coupe en bande (2) selon l'une des revendications précédentes, **caractérisé en ce que** la tôle de profil d'angle (50) délimite en périphérie, dans sa position de montage, de manière fermée dans la direction de travail la cavité (24), la cavité (24) est étanchéifiée par rapport à l'extérieur sur ses extrémités côté frontal avec la section transversale de la tôle de profil d'angle (50) sur des coprs d'étanchéité (44) recouvrant ses extrémités côté frontal et la cavité (24) est délimitée en périphérie vers le bas et l'arrière au moins par endroits par la paroi frontale (32) et la plaque de montage (36).

5. Mécanisme de coupe en bande (2) selon la revendication 3 et 4, **caractérisé en ce que** la tôle de profil d'angle (50) chevauche, dans sa position de montage, par son extrémité arrière, l'arête supérieure (46) de la paroi frontale (32) et des ouvertures de sortie d'air (52) sont réalisées dans la section chevauchant la paroi frontale (32).

6. Mécanisme de coupe en bande (2) selon l'une des revendications précédentes, **caractérisé en ce que** la tôle de profil d'angle (50) comporte, sur son côté pointant dans la direction de travail, une moulure (48), qui s'étend sur la longueur de la tôle de profil d'angle (50) et dont le fond est situé, dans la position de montage de la tôle de profil d'angle (50), davantage en profondeur qu'une section adjacente dans la direction de travail de la tôle de profil d'angle (50).

7. Mécanisme de coupe en bande (2) selon la revendication 6, **caractérisé en ce que** des points de liaison (22) sont réalisés dans la zone de la moulure (48) de telle manière qu'une pièce de serrage est emboîtée sur un boulon monté de manière stationnaire et est serrée avec une vis de serrage depuis l'extérieur sur la tôle de profil de recouvrement (26) ou la tôle de profil d'angle (50), le contour périphérique de la pièce de serrage étant adapté à la forme spatiale de la moulure.

8. Mécanisme de coupe en bande (2) selon l'une des revendications précédentes 2 à 7, **caractérisé en ce que** les tuyaux longitudinaux (40) comportent des tubulures de raccordement (54), par lesquelles un flux d'air (60) généré par une soufflante peut être acheminé dans l'espace intérieur des tuyaux longitudinaux (40) lorsque la tôle de profil d'angle (50) est montée, et les tuyaux longitudinaux (40) font ainsi partie intégrante d'un système de convoyage d'air **en ce qu'**ils guident le flux d'air (60) acheminé à travers leur espace intérieur jusque dans la zone de l'ouverture d'embouchure (38) dans la structure d'angle à lames (10), et les tuyaux longitudinaux (40) font dans le même temps partie intégrante du dispositif de support (14) destiné à supporter le dispositif de convoyage à bande (12) **en ce que** des baguettes de glissement (56) sont placées sur les tuyaux longitudinaux (40), lesquelles s'étendent dans une direction transversalement à la direction de travail du mécanisme de coupe en bande (2) et au-dessus desquelles le brin supérieur du dispositif de convoyage à bande (12) glisse lors de sa rotation.
